# EUROPEAN PATENT SPECIFICATION

(11) **EP 2 601 727 B1**
(45) Date of publication and mention of the grant of the patent: **04.10.2017**
(21) Application number: 11752318.3
(22) Date of filing: 04.08.2011
(51) Int. Cl.: H02K 1/30, H02K 15/12, H02K 1/18, H02K 1/28, H02K 15/02

(54) **INTERLOCKING ARRANGEMENT FOR AN ELECTRIC MOTOR**
INEINANDERGREIFENDE ANORDNUNG FÜR EINEN ELEKTROMOTOR
AGENCEMENT DE VERROUILLAGE DESTINÉ À UN MOTEUR ÉLECTRIQUE

(30) Priority: 05.08.2010 GB 201013238
(43) Date of publication of application: 12.06.2013
(73) Proprietor: Protean Electric Limited, Farnham, Surrey GU10 5E (GB)
(72) Inventor: JAGANJAC, Esad, Hampton Middlesex TW12 3YW (GB)
(74) Representative: Harrison IP Limited
(86) International application number: PCT/GB2011/001172
(87) International publication number: WO 2012/017207

(56) References cited:
- EP-A2- 2 019 471
- JP-A- 2006 087 222
- JP-A- 2007 252 088

## Description

### FIELD OF THE INVENTION

This invention relates to an arrangement for connecting together elements of an electric motor or generator.

### BACKGROUND OF THE INVENTION

Electric motors, and particularly in-wheel mounted electric motors, contain a number of components that need to be securely connected or attached together. The connection must be secure, but there are further considerations because electric motors are often finely tuned for optimum operational characteristics. For example, the distance between the rotor and the stator, between which a magnetic field is generated, should ideally be uniform about the entirety of the rotor/stator. At the same time, electric motors are often exposed to heavy vibrations and must be able to operate satisfactorily under such conditions.

There are components of electric motors that have certain magnetic properties. These components, which will be referred to as magnetic components, may include the back-iron of a stator or the back-iron of a rotor. The materials of these components are chosen primarily for their magnetic properties, in particular having a low reluctance. Typically, to inhibit eddy currents resulting from flux flowing through the material these components are usually manufactured using a number of laminations stacked together. It is often necessary to attach such magnetic components to corresponding structural components, whose materials are chosen primarily to exhibit other properties such as structural rigidity or good heat conductance. For example, the stator will include a magnetic element either in the form of a back-iron having a set of teeth wound with coils of wire, or a set of permanent magnets. The stator will also include a structural element such as a heat sink or housing to which the magnetic element must be attached. Likewise, the rotor may include a set of permanent magnets or set of teeth mounted on a back-iron which need to be connected to a rotor housing.

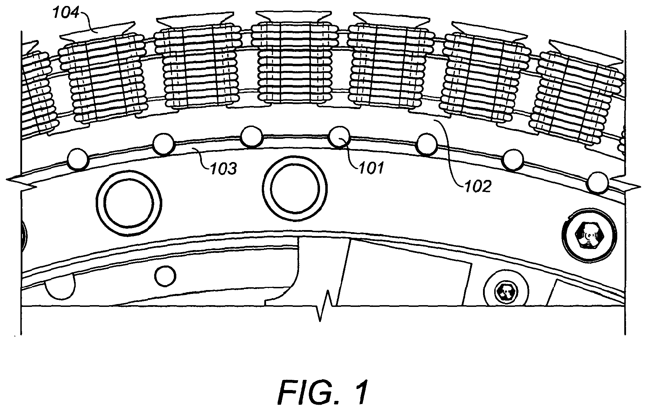

Known solutions for connecting together components of electric motors, such as magnetic and structural components, have focussed on using a third body. For example, Figure 1 shows how a number of locating pins 101 can be used to attach a stator back-iron 102 to a heat sink 103 in an electric motor. The stator back-iron includes 72 coil teeth 104 about which coils of wire can be received, as is known in the art. 72 locating pins are used, one for each tooth, to ensure a uniform engagement.

A disadvantage of using locating pins or similar engagement means is that they are separate to the components that they are connecting. This introduces an additional body that needs to be precisely manufactured within the correct tolerances, to ensure the best possible fit is obtained, and distributed correctly around the motor to ensure it remains balanced. Corresponding holes, also precisely made, are required in both the components that are being connected together to house the locating pins. As a result, it is difficult to ensure an adequate engagement within the required tolerances.

EP2019471 describes a transverse flux machine, including a transverse flux machine housing with a stator located in it and with a rotor rotating about an axis of rotation, wherein the stator includes a coil assembly having at least one phase winding for connection to an electrical phase. The stator includes at least one recess for engaging with corresponding protrusions on the transverse flux machine housing. JP2006087222 describes a method for manufacturing a motor using shrink fitting techniques.

### SUMMARY OF THE INVENTION

The invention is defined in the appended independent claims 1 and 13. Preferred features of the invention are listed in the accompanying subclaims.

An embodiment of the current invention provides an electric motor comprising a rotor and a stator in which two or more of the components are connected together without the need for a third body, such as a locating pin. According to the current invention an electric motor or generator is provided comprising a rotor and a stator. The rotor or the stator may each include first components that have a common circumference with a corresponding second component. In order to connect the first and second components together the first component has one or more recesses or grooves distributed around the circumference, at preferably regular intervals; the corresponding second component has one or more resiliently deformable protrusions. The resiliently deformable protrusions are arranged to protrude into the one or more recesses so as to press against side walls of the recesses and resist relative rotation of the first and second components.

The first and second components are attached together by interference fit along a common perimeter. An interference fit, also known as a press fit, is a fastening between two parts which is achieved by friction after the parts are pushed together. The interference fit is formed by thermal contraction due to at least one of the components comprising a thermally expandable material. The engagement of the protrusions with the grooves prevents relative rotation of the components and improves the transfer of torque between components. In this way, an electric motor comprising one or more components mounted on a common circumference of a second component can be formed, with cooperating engagement means ensuring a degree of flexibility in the connection.

The protrusions themselves may be arranged such that two protrusions protrude into each recess, preferably with each protrusion in a given recess being able to resiliently deform independently of the other protrusion in the recess. In particular, the protrusions may be in the form of a "V" or "U" shape, and the two protrusions may deform by moving or flexing closer together. The resilience of the protrusions may be chosen to be sufficient to dampen vibrations of the rotor or stator. The deformation of the protrusions may be chosen to be sufficient to compensate for variations in geometry between the first and second components.

The process for assembly is to heat one of the components and then slide the components together such that the protrusions protrude into the recesses, ensuring correct alignment. The components are then cooled, so that their walls form an interference fit, and the protrusions press against side walls of the recesses to resist relative rotation of the magnetic and structural components. A complimentary method of constructing an electric motor is therefore provided. One or more first components having grooves at intervals around a circumference as described above are provided. Also provided are one or more second components having resiliently deformable protrusions thereon. One of the components is then heated to expand the dimensions of the component, before cooling to reduce its dimensions such that the resilient protrusions of the second structure protrude into the recesses of the first component so as to press against side walls of the recesses. The heated component is aligned with the complimentary component by the resilient protrusions protruding into the recesses.

In the method, a clearance between the two components is formed by expanding the dimensions of one component by heating it, preferably to a predetermined temperature. The heated component is then positioned to surround the second component with the engagement means of the heated component aligned with the corresponding engagement means formed on the second component. The heated component can then be cooled to contract its dimensions preferably such that an interference fit is formed between the walls of the components. At the same time, deformation of the one of the sets of engagement means occurs to form a resilient engagement between the first and second components.

### BRIEF DESCRIPTION OF THE DRAWINGS

Several embodiments of the invention will now be described in detail with reference to the accompanying figures in which:
Figure 1 is a known arrangement for connecting two components of an electric motor together using locating pins;
Figure 2A is an embodiment of the invention showing a back-iron and a heat sink connected together;
Figure 2B is an enlarged view of the engagement means of Figure 2A;
Figure 3A is a view of a back-iron, such as the one of Figure 2A, prior to attachment to another electric motor component;
Figure 3B is a view of a heat sink, such as the one of Figure 2A, prior to attachment to another electric motor component;
Figure 4A is an embodiment of the invention showing a rotor housing and a back-iron connected together;
Figure 4B is an enlarged view of the engagement means of Figure 4A;
Figure 5A shows a general purpose engagement means according to an embodiment of the current invention prior to the formation of an interference fit;
Figure 5B shows the engagement means of Figure 5A after the formation of an interference fit; and
Figure 6 shows a portion of an electric motor constructed according to an embodiment of the current invention.

### DETAILED DESCRIPTION

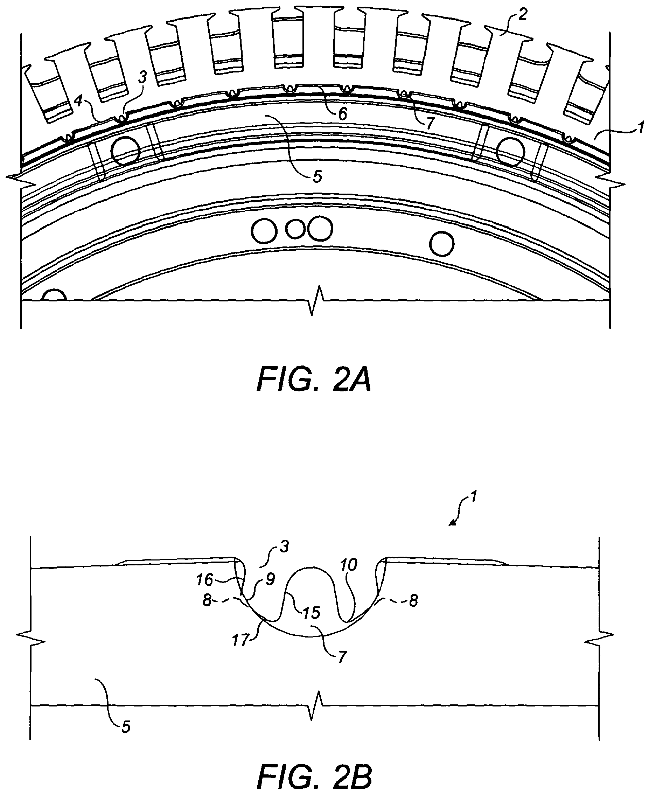

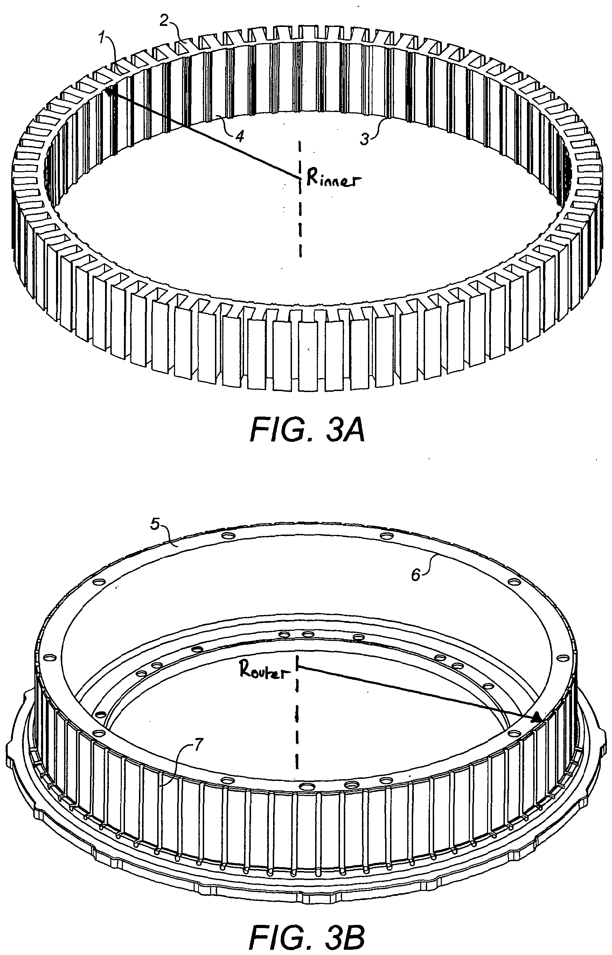

A first embodiment of the invention is shown in Figures 2A and 2B where a first component, here a ring shaped back-iron (1), and a corresponding second component, here a heat sink (5), are attached together. The back-iron and heat sink in their detached states are shown in Figures 3A and 3B respectively.

In this example, the back-iron (1) is circular and of the type having a plurality of teeth (2) arranged to receive coils of wire, the teeth being arranged such that wire can be wound around them. Of course, other forms of back-iron can be used. By controlling the current through the coils of wire a magnetic field is created that can be used to generate movement in a rotor (not shown in Figure 2A), which rotates about the stator, preferably having a plurality of permanent magnets located thereon.

The back-iron (1) is made of a thermally expandable material and particularly of a metal. Examples of such a material include iron, electrical steel (also known as lamination steel, silicon steel or transformer steel) or any other material typically used to construct a stator. Preferably the back-iron is formed from a series of laminations, which may be formed by stamping the desired shape from thin sheets of material, which may typically have a thickness of around 0.35mm.

As can be seen from the figures, the back-iron (1) has a number of engagement means (3) in the form of resilient protrusions located around the inner perimeter/circumference (4) of the ring. These engagement means are integral to the back-iron. This means that the engagement means can be made by standard techniques such as stacking together stamped laminations.

The heat sink (5), to which the back-iron is attached, is a structural component of the stator, arranged to provide structural support and to conduct away heat generated in the stator during operation of the motor. The heat sink is therefore formed of a strong material that is a good conductor of heat, such as a metal, but is also made as light as possible to avoid excess weight in the motor. An example of such a suitable material is aluminium alloy. As shown in the figures, the heat sink has formed around the outer perimeter/circumference (6) a series of engagement means (7), complimentary to the resilient protrusions (3) located on the stator perimeter (4). The engagement means of the heat sink are grooves, or recesses. The recesses may be formed by moulding, casting or forging the heat sink.

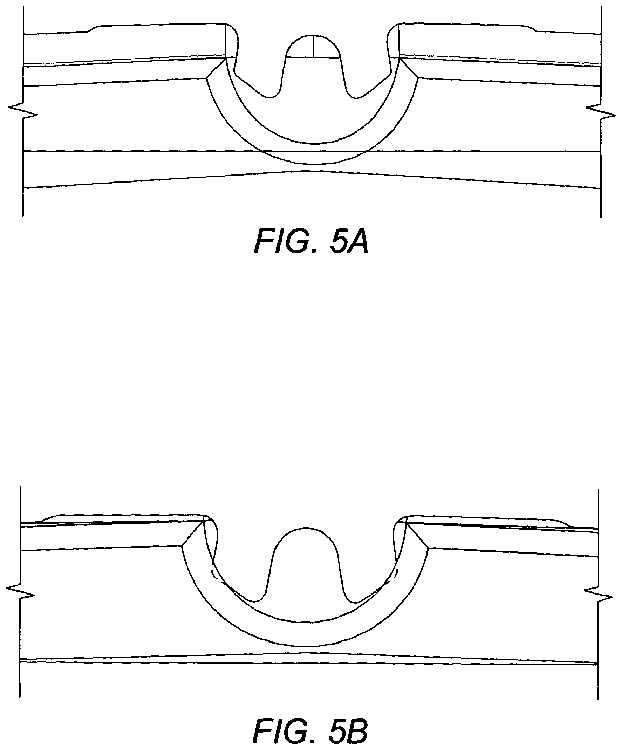

Before attachment, the inner radius (Rᵢₙₙₑᵣ) of the back-iron is very similar to, or substantially the same as, the outer radius of the heat sink (Rₒᵤₜₑᵣ), as shown in Figures 3A and 3B. Upon heating, the material comprising the back-iron expands, increasing its dimensions and in particular increasing the inner radius (Rᵢₙₙₑᵣ). As a result of this expansion, a clearance is formed between the back-iron and the heat sink, due to Rᵢₙₙₑᵣ becoming greater than Rₒᵤₜₑ, allowing the back-iron to fit over the heat sink as shown in Figure 2A. The clearance formed is shown in Figure 5A. As seen in Figure 5A, the resilient protrusions protrude into the recesses after heating of the back-iron. This ensures the correct alignment of the two components. Before cooling, the recesses/grooves of the first component (here the heat sink, a structural component) are aligned with the resilient protrusions of the second component (here the back-iron, a magnetic component) such that they engage on cooling. This is achieved by the protrusions of the stator being received by the recesses of the heat sink prior to cooling. The component having the resilient protrusions can be slid over, or onto, the component having the recesses such that the protrusions protrude into the recesses or grooves. In this way, very little manual alignment is needed to ensure correct engagement and a proper interference fit upon cooling. Upon cooling, the dimensions of the back-iron reduce until the inner perimeter of the back-iron contacts the outer perimeter of the heat sink. This results in a tight interference fit between the back-iron and the heat sink. An interference fit produced in this way allows for good thermal contact between the back-iron and heat sink, whilst simultaneously reducing the degree of tolerance required for attaching the two components over methods using individual pins or other third bodies to physically hold the two components together. However, an interference fit is not strictly necessary to implement the invention.

As mentioned above, a set of one or more protrusions are formed on the back-iron and engage with a set of corresponding grooves, or recesses, on the heat sink. It is particularly preferred that, upon cooling of the back-iron, the protrusions press into the inner surfaces of the recesses and are elastically deformed. In this way, contacts between the protrusions and the inner surfaces of the recesses are formed, producing a resilient engagement and ensuring a more flexible joint. When engaged with the recesses, the protrusions of the back-iron will flex against any movement of the heat sink due to the tangential forces caused by the deformation.

A preferred form for the engagement means is shown in more detail in Figure 2B. As can be seen, resilient protrusions (8) are provided, with two protrusions protruding into each groove or recess. Each protrusion in the recess can resiliently deform independently of the other protrusion. The two protrusions that engage with each recess preferably form substantially a "V" or "U" shape together, but are still each able to deform independently of one another. Deformation occurs preferably by one protrusion moving closer or flexing towards the other, this being assisted by a curvature between the two protrusions, and on either side of them. Preferably, as shown in the Figure, the protrusions have a first side (15) and a second side (16) which extend away from the inner circumference of the back-iron, the first side extending further from the back-iron than the second side, and both preferably extending from the circumference at the same angle relative to a radius passing through the centre of the "V" shape. Preferably this angle is between 15° and 25° and even more preferably between 18° and 19°. A sloping surface (17) connects the first and second sides and contacts a side wall of a recess. The complimentary recess (7) has a curved cross sectional area, being in the form of a sector of a circle, an ellipse, a groove, or a so called "half hole" arrangement. The two protrusions (8) of the "V" shape (3) are arranged such that relative expansion between the recess (7) and the protrusion (3) causes the arms (8) of the "V" to deform towards each other. In particular, the geometry of the arms of the "V" protrusions with sloping surface (17) may be such that, in the undeformed stage, the outer edge (9) of the tip of the arm contacts the inner surface of the recess, but the inner edge (10) of the tip does not. This helps to ensure that, upon relative contraction between the recess and the protrusions, the arms of the protrusions deform and move towards each other. Alternatively, contact between the protrusions and the recess wall may occur during contraction. Figure 5A shows an exaggerated clearance between the protrusion and recess such that they do not touch until contraction occurs, with Figure 5B showing contact between the protrusions and recess walls. Figure 5B does not show the type of resilient deformation discussed above for clarity purposes.

In addition to the assembly of the stator and rotor becoming easier, as described above, the protrusions serve a number of other advantageous purposes. One purpose of the protruding engagement means is to provide sufficient joint friction to obtain a strong join, and to allow the transfer of torque between the structural component and the magnetic component, preventing relative rotation of these components with respect to each other. The resilient protrusions of the magnetic component protrude into the grooves of the structural component so as to press against side walls of the grooves to prevent relative rotation of the magnetic and structural components. Consequently, each individual engagement means may comprise a single resilient protrusion per recess, since this would also prevent relative rotation and transfer torque between components.

The protrusions are elastically, or resiliently, deformable. In response to a force exerted on the protrusions through the surface of the recess with which it is engaged, the protrusions will deform but will also exert a restoring force when deformed due to their elastic properties. This allows the protrusions to dampen vibrations within the rotor or stator. The resilience of the protrusions is sufficient to reduce vibrations passing between the first and second components being joined by the engagement means, with the energy from the vibrations being absorbed by deformation, contraction and/or expansion of the resilient protrusions.

The resilient deformation of the protrusions is also sufficient to compensate for variations in geometry between the first and second components which would otherwise result in the stator being unstable or unbalanced. For example, when the heated back-iron is placed around the heat sink the protrusions will protrude into the recesses and will then engage with the sidewalls and deform upon cooling. If, due to variations in circumference between components, one or more protrusions do not contact the sidewalls but other protrusions around the common circumference do, the protrusions in contact will start to deform before the others to compensate. It is also possible that some protrusions will deform to a greater extent to other protrusions to compensate. Particularly advantageously, in the case where two protrusions protrude into each recess, if one side of a recess contacts one protrusion before the other side of the recess contacts the other protrusion then the first protrusion will start to deform before the second protrusion. Compensation for such variations is possible because each protrusion can deform independently of the others.

The views of Figures 3A and 3B show how the protrusions and recesses of the engagement means can extend through the entire thickness of the components to ensure maximum contact area. The recesses can therefore take the form of slots or grooves in the structural component.

Preferably the protrusions on the back-iron are arranged between the individual teeth as shown in the figures (see Figure 3A for example). This is to provide a clear pathway for heat generated in the coil windings to flow down the teeth, through the ring of the back-iron and across the boundary into the heat sink. It is also possible to include a thermally conductive compound between the protrusions and recesses to improve heat flow across the boundary between the back-iron and heat sink. The thermally conductive compound may also be an adhesive.

Embodiments of the present invention provide a far more reliable joint between components than a simple press fit joint or press fit joint that incorporates locating pins. The elastically deformable protrusions provide additional support for transferring torque between the components and are capable of compensating for tolerance variations due to the spring effect that they produce (being resilient bodies). The spring effect also prevents the joint weakening when it is subjected to elevated temperatures, with different average temperatures between the joint components. By having an interference fit on the peripheral circumferences and an additional interference fit between the resilient protrusions and the recesses, which also incorporates a spring effect due to the resilient nature of the protrusions, the joint becomes stronger than a joint that uses only locating pins.

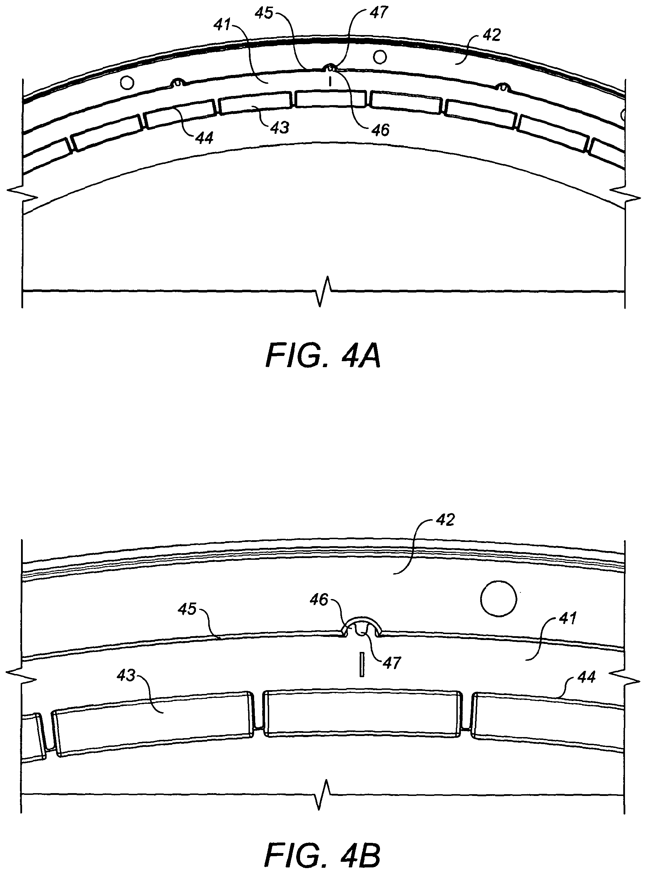

A second embodiment is shown in Figures 4A and 4B. In this embodiment the attachment is between a magnetic component of a rotor, here the back-iron (41) and a structural component (42) of the rotor, here a support for the rotor back iron (41) commonly known as a housing (42). The key difference between this embodiment and the previously described embodiment is that the component having protruding engagement means is not subjected to expansion and contraction to form an interference fit. Instead, the structural component, having the recessed engagement means, is expanded and then contracted. In this way, it should be appreciated that in general terms the protruding and recessed engagement means can be applied to either the inner or the outer components being connected together.

As can be seen from the second embodiment, a rotor back-iron (41) is provided having a circular or ring shape and a plurality of permanent magnets (43) arranged around the inner perimeter (44). The rotor back-iron may be formed of steel or electrical steel and is preferably made up of a series of laminations. A number of protruding engagement means (46) are also arranged around the outer perimeter (45), formed integrally with the body of the rotor back-iron.

Also provided is the housing (42) to which the rotor back-iron is to be connected or attached. The rotor housing is formed of a ring of material, preferably aluminium or an alloy of aluminium, chosen to be structurally strong yet also light weight and corrosion resistant. Formed integrally with the housing are a plurality of engagement means in the form of recesses or grooves (47), that complimentarily engage with the engagement means of the rotor back-iron, here in the form of resilient protrusions (46). The recesses may be formed by moulding, casting, machining or forging the housing (42).

The housing and rotor back-iron are initially formed with substantially the same inner and outer radii respectively. Upon heating, the housing expands resulting in an increased radius allowing the housing to be placed over, and around, the rotor back-iron. The resilient protrusions protrude into the recesses after heating of the housing. This ensures the correct alignment of the two components. Upon cooling, the rotor housing contracts to form an interference fit with the back-iron. In addition, the engagement means on both components engage with one another in the manner described above for the embodiment featuring the stator back-iron and heat sink.

As the housing contracts towards the back-iron the protruding engagement means are deformed. Where a "V" or "U" shaped arrangement is used, as described above, the arms are again forced towards each. Of course, any of the arrangements or features of protrusions described in relation to the stator back-iron/heat sink embodiment are equally applicable to the rotor back-iron/housing embodiment.

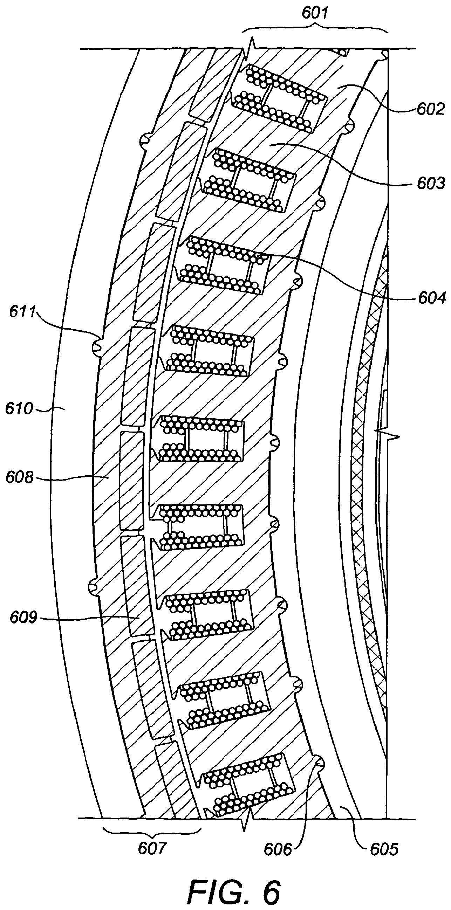

Figure 6 shows a portion of an electric motor constructed in accordance with the above embodiments. The stator, indicated generally by reference (601), comprises the back-iron (602) having stator teeth (603) with coil windings (604) arranged thereon. The back-iron is attached to the heat sink (605) by an interference fit, and a plurality of resilient protrusions (606) engaging with complimentary recesses as described above. The rotor, indicated generally by reference (607), comprises a back iron (608), having mounted thereon a plurality of magnets (609), and a rotor housing (610). The back-iron and rotor housing are attached by an interference fit, and a plurality of resilient protrusions (611) engaging with complementary recesses as described above.

In any embodiment of the invention the protrusions may protrude around 1-2 mm from the circumference of the component on which they are formed, and preferably 1.10-1.20 mm. The protrusions may extend in the circumferential direction around 2-4 mm, and preferably between 2.50 and 3.00 mm. When used to connect together an inner part of an electric motor (or generator), i.e. the stator, the forces acting on the components are large, so a large number of protrusions and corresponding recesses are required, such as between 60 and 100, or more preferably between 70 and 80. Even more preferably, the same number of protrusions and recesses are used as there are teeth on the stator, for example 72. On the outer part of an electric motor (or generator), i.e. the rotor, the forces acting on the components are lower and so correspondingly fewer protrusions and recesses are required to connect two components together. Preferably between 10 and 50 and more preferably between 25 and 35 protrusions and recesses are used. This may, for example, correspond to half the number of permanent magnets in the rotor.

When producing the interference fit in either embodiments of the invention it is necessary to heat up one of the components to cause expansion. The temperature to which the component is heated depends upon a number of factors including the degree of expansion required to generate a clearance, the thermal expansion coefficient of the material and the safe temperature to which the material can be heated. For example, the rotor back-iron may contain, or have mounted thereon, permanent magnets and it would not be desirable to heat them above the Curie temperature, at which point permanent magnetism is lost. The component to be expanded may need to be heated to between 100°C to 200°C, but preferably (particularly in the case of the rotor back-iron) to approximately 120°C. To create the contraction required the component can simply be allowed to cool down to room temperature, or active cooling could be used.

Particulars of the assembly process for embodiments of the invention will now be discussed. The assembly process to attach the stator back-iron to the heat sink may be achieved using a "hot drop" operation. By this it is meant that the back-iron is heated to a temperature of, preferably, 120°C whilst keeping the heat sink at or near room temperature. The back-iron is then lowered into position around the heat sink before cooling the back-iron. During operation of the electric motor, it is estimated that the average stator back-iron temperature will be around 143°C and that the average heat sink temperature will be around 93°C. With given joint tolerances there will be interference (i.e. constant contact) between the stator back-iron and heat sink from 0.070mm to 0.176mm - that is, the difference between the outer diameter of the heat sink and inner diameter of the back iron. This interference will provide an average slip (break) torque of 1933 Nm. On top of the force provided by the interference fit, the interlocking features serve to keep the joint tight and provide torque transfer form the back-iron to the heat sink, and further to the motor interface.

The assembly process to attach the rotor back-iron to the rotor housing may also be achieved by performing a "hot drop" operation. Again, the rotor housing is heated to a temperature of, preferably, 120°C, whilst keeping the magnets and the rotor back-iron at around room temperature. During operation of the electric motor, it is estimated that the average temperature of the rotor back-iron will be around 150°C and the rotor housing around 111°C. This will give rise to an interference fit of 0.013mm-0.213mm (that is, the difference between outer diameter of the rotor back iron and inner diameter of the rotor housing) depending on the joint tolerances achieved, and will provide an average slip (break) torque of 1290Nm. On top of this the interlocking features keep the joint tight and provide torque transfer from the rotor back-iron to the rotor housing.

It will be appreciated that whilst the invention has been described in relation to electric motors, the similarity between design considerations of electric motors and generators will mean that the invention can also be implemented with components of electric generators. Furthermore, it will be appreciated that there are many different variations in design for electric motors/generators in which the current invention can be used. For example, in some designs the rotor may surround the stator, but in other designs the opposite is true. As a further example, the stator may comprise the permanent magnets, with the coils of wire being located on the rotor.

Embodiments of the invention as described above are particularly suitable for use in electric motors for electric vehicles and particularly road-going electric automobiles. Embodiments are also particularly suitable for use in in-wheel electric motors, in which the electric motor is mounted within the wheel of an electric vehicle or automobile.

## Claims

1. An electric motor or generator comprising a rotor and a stator,
at least one of the rotor and stator comprising a first (42) and a second (41) component having a common circumference (45),
the first component having one or more recesses (47) distributed around the circumference;
the second component having one or more protrusions (46) arranged to protrude into the one or more recesses so as to press against side walls of the recesses to resist relative rotation of the first and second components; **characterized in that**
the protrusions (46) are resiliently deformable;
wherein the first component is fitted to the second component by heating and subsequent cooling so as to form an interference fit between the first component and the second component and to resiliently deform the protrusions against the side walls of the recesses; and
wherein the first component is fitted to the second component by sliding the protrusions into the recesses so as to align the respective components prior to cooling.

2. An electric motor or generator according to claim 1, wherein two protrusions protrude into each recess and wherein each protrusion in a recess can resiliently deform independently of the other protrusion in the recess.

3. An electric motor or generator according to claim 2 wherein the two protrusions substantially form a "V" shape or a "U" shape cross section.

4. An electric motor or generator according to claim 2 or 3 wherein the two protrusions within each recess can deform by moving closer together.

5. An electric motor or generator according to claim 3 wherein the protrusions have a first side and a second side, the first side extending further from the second component than the second side, wherein the surface that connects the first and second sides contacts a side wall of a recess.

6. An electric motor or generator according to any preceding claim wherein the resilience of the protrusions is sufficient to dampen vibrations of the rotor or stator and/or wherein the deformation of the protrusions is sufficient to compensate for variations in geometry between the first and second components.

7. An electric motor or generator according to any preceding claim wherein the recesses are in the form of grooves.

8. An electric motor or generator according to any preceding claim wherein the second component and the resilient protrusions are formed by a plurality of laminations.

9. An electric motor or generator according to any preceding claim wherein the first component is a structural component and the second component is a magnetic component.

10. An electric motor or generator according to claim 9 wherein the structural component is a rotor housing or a stator support.

11. An electric motor or generator according to claim 9 or 10 wherein the magnetic component comprises a plurality of coil winding components arranged around a circumference and the resilient protrusions are arranged circumferentially between said coil winding components.

12. An electric motor or generator according to any preceding claim wherein the materials used for the first component and corresponding second component are selected so that the relative thermal expansion between the components is such that an interference fit is maintained over the range of operating temperatures of the electric motor or generator.

13. A method of assembling an electric motor or generator according to any of claims 1 to 12 comprising the steps of:
- providing a first component (42) and a corresponding second component (41), at least one of these components having one or more recesses (47) distributed around a circumference (45) and the corresponding component having one or more resilient protrusions (46) around a circumference (45);
- heating one of the first or second components to expand the dimensions of the component;
- sliding the components together such that the resilient protrusions protrude into the recesses;
- cooling the heated component to reduce its dimensions such that the resilient protrusions press against side walls of the grooves.

14. A method according to claim 13 wherein the magnetic or structural component is heated to a temperature within the range 100°C to 200°C, and preferably wherein the temperature is approximately 120°C.

15. An electric vehicle comprising one or more electric motors according to any of claims 1 to 12, preferably as in-wheel electric motors.

## Patentansprüche

1. Elektromotor oder Generator, umfassend einen Rotor und einen Stator,
wobei mindestens einer des Rotors und Stators eine erste (42) und eine zweite (41) Komponente umfasst, die einen gemeinsamen Umfang (45) aufweisen,
wobei die erste Komponente eine oder mehrere Aussparungen (47) aufweist, die um den Umfang verteilt sind;
wobei die zweite Komponente einen oder mehrere Vorsprünge (46) aufweist, die angeordnet sind, um in die eine oder die mehreren Aussparungen vorzustehen, um gegen Seitenwände der Aussparungen zu drücken, um einer entsprechenden Drehung der ersten und zweiten Komponente standzuhalten;
**dadurch gekennzeichnet, dass**
die Vorsprünge (46) elastisch verformbar sind;
wobei die erste Komponente durch Erwärmen und anschließendes Abkühlen an die zweite Komponente angepasst wird, um einen Formschluss zwischen der ersten Komponente und der zweiten Komponente zu formen und um die Vorsprünge elastisch gegen die Seitenwände der Aussparungen zu verformen; und
wobei die erste Komponente an die zweite Komponente durch ein Verschieben der Vorsprünge in die Aussparungen angepasst wird, um die entsprechenden Komponenten vor dem Abkühlen auszurichten.

2. Elektromotor oder Generator nach Anspruch 1, wobei zwei Vorsprünge in jede Aussparung vorstehen und wobei sich jeder Vorsprung in einer Aussparung unabhängig von dem anderen Vorsprung in der Aussparung elastisch verformen kann.

3. Elektromotor oder Generator nach Anspruch 2, wobei die zwei Vorsprünge im Wesentlichen einen Querschnitt in "V"-Form oder in "U"-Form formen.

4. Elektromotor oder Generator nach Anspruch 2 oder 3, wobei sich die zwei Vorsprünge in jeder Aussparung verformen können, indem sie sich näher zueinander bewegen.

5. Elektromotor oder Generator nach Anspruch 3, wobei die Vorsprünge eine erste Seite und eine zweite Seite aufweisen, wobei sich die erste Seite weiter von der zweiten Komponente erstreckt als die zweite Seite, wobei die Fläche, welche die erste und zweite Seite verbindet, eine Seitenwand einer Aussparung berührt.

6. Elektromotor oder Generator nach einem der vorhergehenden Ansprüche, wobei die Elastizität der Vorsprünge ausreicht, um Vibrationen des Rotors oder Stators zu dämpfen und/oder wobei die Verformung der Vorsprünge ausreicht, um Variationen hinsichtlich der Geometrie zwischen der ersten und zweiten Komponente zu kompensieren.

7. Elektromotor oder Generator nach einem der vorhergehenden Ansprüche, wobei die Aussparungen in der Form von Nuten vorliegen.

8. Elektromotor oder Generator nach einem der vorhergehenden Ansprüche, wobei die zweite Komponente und die elastischen Vorsprünge durch eine Vielzahl von Lamellen geformt werden.

9. Elektromotor oder Generator nach einem der vorhergehenden Ansprüche, wobei die erste Komponente eine strukturelle Komponente ist und die zweite Komponente eine magnetische Komponente ist.

10. Elektromotor oder Generator nach Anspruch 9, wobei die strukturelle Komponente ein Rotorgehäuse oder eine Statorstütze ist.

11. Elektromotor oder Generator nach Anspruch 9 oder 10, wobei die magnetische Komponente eine Vielzahl von Spulenwicklungskomponenten umfasst, die um einen Umfang angeordnet sind und die elastischen Vorsprünge umlaufend zwischen den Spulenwicklungskomponenten angeordnet sind.

12. Elektromotor oder Generator nach einem der vorhergehenden Ansprüche, wobei die Materialien, die für die erste Komponente und die zugehörige zweite Komponente verwendet werden, so ausgewählt werden, dass die entsprechende Wärmeausdehnung zwischen den Komponenten dergestalt ist, dass ein Formschluss über die Spanne der Betriebstemperaturen des Elektromotors oder Generators beibehalten wird.

13. Verfahren zum Zusammenbauen eines Elektromotors oder Generators nach einem der Ansprüche 1 bis 12, umfassend die folgenden Schritte:
- Bereitstellen einer ersten Komponente (42) und einer zugehörigen zweiten Komponente (41), wobei mindestens eine dieser Komponenten eine oder mehrere Aussparungen (47) aufweist, die um einen Umfang (45) verteilt sind und die zugehörige Komponente einen oder mehrere elastische Vorsprünge (46) um einen Umfang (45) aufweist;
- Erwärmen von einer der ersten oder zweiten Komponente, um die Abmessungen der Komponente auszudehnen;
- gemeinsames Verschieben der Komponenten, sodass die elastischen Vorsprünge in die Aussparungen vorstehen;
- Abkühlen der erwärmten Komponente, um ihre Abmessungen zu verringern, sodass die elastischen Vorsprünge gegen Seitenwände der Nuten drücken.

14. Verfahren nach Anspruch 13, wobei die magnetische oder strukturelle Komponente auf eine Temperatur in dem Bereich von 100 °C bis 200 °C erwärmt wird, und vorzugsweise wobei die Temperatur annähernd 120 °C entspricht.

15. Elektrofahrzeug, umfassend einen oder mehrere Elektromotoren nach einem der Ansprüche 1 bis 12, vorzugsweise als Radnabenelektromotoren.

## Revendications

1. Moteur électrique ou générateur comprenant un rotor et un stator,
le rotor et le stator, et au moins un d'entre eux, comprenant un premier (42) et un deuxième (41) composants ayant un pourtour commun (45),
le premier composant possédant un ou plusieurs évidements (47) répartis sur son pourtour ;
le deuxième composant présentant une ou plusieurs saillies (46) agencées pour dépasser dans le ou plusieurs évidements de façon à faire pression contre des parois latérales des évidements afin de résister à la rotation relative des premier et deuxième composants ; **caractérisé en ce que**
les saillies (46) sont déformables de façon élastique ;
le premier composant est monté sur le deuxième composant par son chauffage suivi de son refroidissement, de façon à former un ajustement serré entre le premier composant et le deuxième composant, et à déformer de façon élastique les saillies contre les parois latérales des évidements ; et
le premier composant étant monté sur le deuxième composant en coulissant les saillies dans les évidements, de façon à aligner les composants respectifs préalablement au refroidissement.

2. Moteur électrique ou générateur selon la revendication 1, deux saillies dépassent dans chaque évidement, et chaque saillie dans un évidement pouvant se déformer de façon élastique indépendamment de l'autre saillie dans l'évidement.

3. Moteur électrique ou générateur selon la revendication 2, les deux saillies formant substantiellement une section transversale en forme de « V » ou de « U ».

4. Moteur électrique ou générateur selon la revendication 2 ou 3, les deux saillies dans chaque évidement pouvant se déformer en se rapprochant l'une de l'autre.

5. Moteur électrique ou générateur selon la revendication 3, les saillies présentant un premier côté et un deuxième côté, le premier côté s'étendant davantage depuis le deuxième composant par rapport au deuxième côté, la surface raccordant les premier et deuxième côtés entrant en contact avec une paroi latérale d'un évidement.

6. Moteur électrique ou générateur selon une quelconque des revendications précédentes, l'élasticité des saillies étant suffisante pour amortir les vibrations du rotor et du stator et/ou la déformation des saillies étant suffisante pour compenser les variations de la géométrie entre les premier et les deuxième composants.

7. Moteur électrique ou générateur selon une quelconque des revendications précédentes, les évidements se présentant sous forme de cannelures.

8. Moteur électrique ou générateur selon une quelconque des revendications précédentes, le deuxième composant et les saillies élastiques étant formés par une pluralité de stratifications.

9. Moteur électrique ou générateur selon une quelconque des revendications précédentes, le premier composant étant un composant structurel et le deuxième composant étant un composant magnétique.

10. Moteur électrique ou générateur selon la revendication 9, le composant structurel étant un carter de rotor ou un support de stator.

11. Moteur électrique ou générateur selon la revendication 9 ou 10, le composant magnétique comprenant une pluralité de composants de bobinage disposés sur un pourtour, et les saillies élastiques étant disposées de façon circonférentielle entre lesdits composants de bobinage.

12. Moteur électrique ou générateur selon une quelconque des revendications précédentes, les matériaux utilisés pour le premier composant et le deuxième composant correspondant étant sélectionnés de sorte que l'expansion thermique relative entre les composants est telle qu'un ajustement serré est maintenu sur la plage des températures de service du moteur électrique ou du générateur.

13. Méthode d'assemblage d'un moteur électrique ou d'un générateur selon une quelconque des revendications 1 à 12, comprenant les étapes suivantes :
- mise en place d'un premier composant (42) et d'un deuxième composant correspondant (41), au moins un de ces composants comprenant un ou plusieurs évidements (47) distribués autour d'une circonférence (45), et le composant correspondant possédant une ou plusieurs saillies élastiques (46) autour d'une circonférence (45) ;
- chauffage du premier ou du deuxième composant de façon à réaliser l'expansion des dimensions du composant ;
- coulissement des composants ensemble de sorte que les saillies élastiques dépassent dans les évidements ;
- refroidissement du composant chauffé de façon à réduire ses dimensions afin que les saillies élastiques fassent pression contre les parois latérales des cannelures.

14. Méthode selon la revendication 13, le composant magnétique ou structurel étant chauffé à une température comprise entre 100°C et 200°, et la température étant, de préférence, 120°C environ.

15. Un véhicule électrique comprenant un ou plusieurs moteurs électriques selon une quelconque des revendications 1 à 12, de préférence en tant que moteurs-roue.
